(19) Europäisches Patentamt
European Patent Office
Office européen des brevets

(11) **EP 3 040 796 B1**

## (12) EUROPÄISCHE PATENTSCHRIFT

(45) Veröffentlichungstag und Bekanntmachung des Hinweises auf die Patenterteilung:
**09.08.2023 Patentblatt 2023/32**

(21) Anmeldenummer: **15199534.7**

(22) Anmeldetag: **11.12.2015**

(51) Internationale Patentklassifikation (IPC):
**G05B 19/404** *(2006.01)*

(52) Gemeinsame Patentklassifikation (CPC):
**G05B 19/404;** G05B 2219/41426;
G05B 2219/43022; G05B 2219/45229

(54) **VERFAHREN UND VORRICHTUNG ZUM STEUERN EINER WERKZEUGMASCHINE**

METHOD AND DEVICE FOR CONTROLLING A MACHINE TOOL

PROCEDE ET DISPOSITIF DESTINES A LA COMMANDE D'UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2014 DE 102014225691**

(43) Veröffentlichungstag der Anmeldung:
**06.07.2016 Patentblatt 2016/27**

(73) Patentinhaber: **HOMAG GmbH**
**72296 Schopfloch (DE)**

(72) Erfinder:
• **Dettling, Peter**
**72160 Horb (DE)**
• **Morlock, Markus**
**72250 Freudenstadt (DE)**

(74) Vertreter: **Hoffmann Eitle**
**Patent- und Rechtsanwälte PartmbB**
**Arabellastraße 30**
**81925 München (DE)**

(56) Entgegenhaltungen:
WO-A1-2008/128918    DE-A1-102011 121 530
DE-A1-102013 207 107

EP 3 040 796 B1

## Beschreibung

### TECHNISCHES GEBIET

Die vorliegende Erfindung bezieht sich auf ein Verfahren zum Steuern eines Achsenantriebsstrangs einer Werkzeugmaschine gemäß Patentanspruch 1 sowie auf eine Vorrichtung mit einer Steuerung zur Ausführung desselben.

### STAND DER TECHNIK

Im Bereich der Werkzeugmaschinen zum Bearbeiten eines Werkstücks, das bevorzugt zumindest abschnittsweise aus Holz, Holzwerkstoffen, Kunststoff oder dergleichen besteht, finden Achsenantriebsstränge zum Verstellen von Werkzeugen oder sonstigen Einrichtungen eine häufige Verwendung. Beispielsweise ist eine Tasteinrichtung zur Führung eines Werkzeugs entlang eines Werkstücks häufig mit solch einem Achsenantriebsstrang versehen, wobei mittels des Achsenantriebsstrangs die Relativzustellung der Tasteinrichtung zum Werkstück und damit die Zustellung des Werkstücks zum Werkzeug verstellbar ist. Dabei ist es hier zur Erzielung hochqualitativer Bearbeitungsergebnisse von Vorteil, eine Tasteinrichtung bzw. einen Achsenantriebsstrang vorzusehen, der eine konstante Andrückkraft der Tasteinrichtung an das Werkstück unabhängig von der Tastweite und auch während des Verstellvorgangs ermöglicht.

Im technischen Gebiet der Tasteinrichtungen für Werkzeugmaschinen sind der Anmelderin lediglich Verfahren und Vorrichtungen bekannt, bei denen eine derartige konstante Andrückkraft der Tasteinrichtung an das Werkstück mittels einer klassischen Rückkopplungsregelung annäherungsweise herbeigeführt wird. Diese Verfahren und Vorrichtungen weisen jedoch den Nachteil auf, dass es zeitweise zu Abweichungen von der konstanten Andrückkraft kommt, was zu Einbußen bei der Bearbeitungsqualität führt. Dies ist unter anderem darin begründet, dass es bei der Regelung zu Abweichungen zwischen dem Soll- und Istwert des Achsenantriebsstrangs auf Grund von Störgrößen in dem Achsenantriebsstrang kommt, die durch die Rückkopplungsregelung nicht oder lediglich zeitversetzt ausgeglichen werden können.

Aus technischen Gebieten, die dem der Werkzeugmaschinen fremd sind, sind der Anmelderin ferner Verfahren und Vorrichtungen bekannt, bei denen eine so genannte Vorabkompensation von Störgrößen bei der Steuerung einer Welle erfolgt.

So beziehen sich beispielsweise die EP 1 780 095 A1 auf eine Rastmomentkompensation einer Lenkeinrichtung und die DE 2009 046 959 A1 auf eine Rastmomentkompensation einer Arbeitsmaschine, bei denen jeweils das Rastmoment einer Antriebseinrichtung modelliert und in der Sollwertbestimmung der Rückkopplungsregelung berücksichtig wird. Ebenso ist der Anmelderin die DE 10 2011 121 530 A1 bekannt, bei welcher eine periodisch wiederkehrende Momentenverlaufsänderung für periodisch wiederkehrende Bewegungspfade einer Rotationsachse einer Druckmaschine in der Sollwertbestimmung der Regelung berücksichtigt wird. Die Abweichung zwischen Soll- und Istwert kann durch solch eine Vorabberücksichtigung von Störgrößen reduziert werden.

Diese Verfahren und Vorrichtungen stammen jedoch aus einem entfernten technischen Gebiet und weisen darüber hinaus die Nachteile auf, dass bei nicht periodisch wiederkehrenden Bewegungspfaden keine Störgrößenkompensation in der Steuerung bzw. Regelung möglich ist und/oder lediglich ein Teil der auftretenden Störgrößen in der Steuerung/Regelung berücksichtigt wird. Folglich führen die Verfahren und Vorrichtungen im Stand der Technik zu Qualitätseinbußen bei der Bearbeitung mit beliebigen Bewegungspfaden.

Als weiteres Dokument ist ergänzend die WO 2008/128918 A1 zu nennen, die eine Regelanordnung mit Korrektur lageabhängiger systematischer Fehler betrifft. Die Regelanordnung weist hierzu einen Regler auf, von dem im Betrieb der Regelanordnung Sollwerte und Istwerte des Antriebs im Rahmen einer Soll-Ist-Regelung verarbeitet werden. Ferner weist die Regelanordnung eine Ermittlungseinrichtung auf, von der im Betrieb der Regelanordnung iterativ in Abhängigkeit von zumindest den Istwerten jeweils eine abgeleitete Größe ermittelt wird und die abgeleitete Größe einer Auswertungseinrichtung zugeführt wird.

### DARSTELLUNG DER ERFINDUNG

Es ist daher Aufgabe der vorliegenden Erfindung, ein Verfahren und eine Vorrichtung zum Steuern eines Achsenantriebsstrangs einer Werkzeugmaschine bereitzustellen, mit dem/der bei beliebigen Bewegungspfaden des Achsenantriebsstrangs eine hohe Bearbeitungsqualität ermöglicht wird.

Gemäß einem ersten Aspekt der vorliegenden Erfindung wird diese Aufgabe erfindungsgemäß durch ein Verfahren zum Steuern eines Achsenantriebsstands einer Werkzeugmaschine zur Bearbeitung eines Werkstücks, das bevorzugt zumindest abschnittsweise aus Holz oder Holzwerkstoffen, Kunststoff oder dergleichen besteht, nach Anspruch 1 gelöst, bei dem Führungsgrößen an Positionen einer Achse des Achsenantriebsstrangs bestimmt werden und diese Führungsgrößen an diesen Positionen mit Korrekturwerten korrigiert werden. Erfindungsgemäß werden die Korrekturwerte dabei mittels Leistungskennzahlen einer Antriebseinrichtung an den Position, an welchen die Führungsgrößen bestimmt werden, ermittelt, wobei es sich bei den Leistungskennzahl um solche handelt, die sich einstellen, wenn die Achse des Achsenantriebsstands durch die Antriebseinrichtung lastlos auf eine konstante Geschwindigkeit beschleunigt und mit dieser konstanten Geschwindigkeit entlang der Positionen, an welchen die Führungsgrößen bestimmt werden, verfahren wird. Bei den Führungsgrößen kann es sich beispielsweise um einen Momenten-Sollwertverlauf handeln, wobei hier auch andere Größen denkbar sind. Unter einem lastlosen Verfahren der Achse des Achsenantriebsstrangs wird hier ein Verfahren verstanden, bei dem keine äußere Last an den Achsenantriebsstrang angelegt ist. Bei den Führungsgrößen kann es sich um einen Führungsgrößenverlauf entlang eines Verfahrwegs handeln. Bei dem Verfahren der Achse kann es sich um ein Verfahren entlang des gesamten Verfahrwegs der Achse des Achsenantriebsstrangs handeln.

Die Korrekturwerte haben dabei einen positionsunabhängigen konstanten und einen positionsabhängigen variablen Anteil aufweisen. Unter einem positionsunabhängigen konstanten Anteil wird jener Anteil der Korrekturwerte verstanden, der sich zwischen den verschiedenen Positionen gleicht. Dieser konstante Anteil kann auf Masse, also Inertialkräfte, und/oder Reibkräfte und/oder weitere zurückzuführen sein. Der positionsabhängige variable Anteil der Korrekturwerte ist jener Anteil, der positionsspezifisch ist und sich zwischen verschiedenen Positionen unterscheidet. Der variable Anteil der Korrekturwerte kann auf mechanische und/oder elektromechanische Kräfte zurückzuführen sein. In dieser Ausgestaltung werden die Führungsgrößen folglich mit Korrekturwerten korrigiert, die positionsabhängige und positionsunabhängige Anteile aufweisen. Folglich wird eine Steuerung mit einer erhöhten Genauigkeit bereitgestellt, die eine verbesserte Bearbeitungsqualität ermöglicht.

Dabei können der jeweilige positionsunabhängige konstante und der jeweilige positionsabhängige variable Anteil der Korrekturwerte an den jeweiligen Positionen bevorzugt im Rahmen des erfindungsgemäßen Steuerungsverfahrens aufsummiert werden. Da sich der positionsunabhängige Anteil zwischen den Positionen gleicht, muss dieser lediglich einmalig abgespeichert werden. Der variable Anteil ist um den konstanten Anteil kleiner als die Störgröße. Durch die Zerlegung und Aufsummierung bei der Korrektur wird demnach eine Steuerung bereitgestellt, die einen geringen Speicherplatz erfordert.

Vorteilhafterweise werden mit den erfindungsgemäßen Korrekturwerten alle an den entsprechenden Positionen auftretenden Störgrößen des Achsenantriebsstrangs erfasst. Diese erfindungsgemäße positionsabhängige Störgrößenerfassung durch die Korrekturwerte ermöglicht daher eine Steuerung zur vollständigen Vorabkompensation von Störgrößen bei beliebigen Bewegungspfaden. Im Resultat stellt die vorliegende Erfindung ein Verfahren zur Steuerung eines Achsenantriebsstrangs einer Werkzeugmaschine mit einer hohen Genauigkeit bereit, die unabhängig von dem Bewegungspfad des Achsenantriebsstrangs, also für periodische und nicht periodisch wiederkehrende Bewegungspfade, erzielbar ist. Selbstverständlich kann es sich hier auch um ein Verfahren zum Regeln, z.B. mittels einer Rückkopplungsregelung, handeln.

Erfindungsgemäß sind die Korrekturwerte richtungsabhängig. Dies bedeutet, dass für jede Verfahrrichtung der Achse des Achsenantriebsstrangs separate Korrekturwerte vorliegen. Durch diese bevorzugte Ausgestaltung wird ein Steuerverfahren zur Vorabkompensation von Störgrößen bereitgestellt, das Richtungseinflüsse berücksichtigt. Daher wird eine richtungsabhängige Störgrößenkompensation mittels richtungsabhängiger Korrekturwerte ermöglicht. Im Ergebnis wird eine Steuerung mit einer erhöhten Genauigkeit bereitgestellt, die eine verbesserte Bearbeitungsqualität ermöglicht.

Erfindungsgemäß weist der positionsunabhängige konstante Anteil einen richtungsunabhängigen Masseanteil und einen richtungsabhängigen Reibanteil auf. Dies ist bevorzugt dann der Fall, wenn die Bewegungsrichtung des Achsenantriebsstrangs eine nicht-horizontale Komponente aufweist. Folglich wird eine Korrektur der Führungsgrößen mit Korrekturwerten ermöglicht, die sowohl Inertial- als auch Reibkraftstörungen umfassen. Der Masseanteil ist für alle Bewegungsrichtungen identisch, während sich der Reibanteil zwischen den Bewegungsrichtungen unterscheiden kann. Da die Korrekturwerte sowohl Inertial- als auch richtungsabhängige Reibkräfte umfassen, wird eine Steuerung mit einer erhöhten Genauigkeit bereitgestellt, die eine verbesserte Bearbeitungsqualität ermöglicht. Bevorzugt kann das Verfahren dabei das Aufsummieren des Produkts aus richtungsunabhängigem Masseanteil und dem jeweiligen Beschleunigungswert der Führungsgröße an der jeweiligen Position und des richtungsabhängigen Reibanteils umfassen. Da sich der Masseanteil für alle Bewegungsrichtungen gleicht, muss dieser lediglich einmalig abgespeichert werden, während für jede Bewegungsrichtung ein Reibanteil abzuspeichern ist. Der erforderliche Speicherplatz für den richtungsabhängigen Reibanteil wird jedoch um den Massenanteil verringert, sodass hierdurch ein Verfahren bereitgestellt werden kann, das wenig Speicherplatz erfordert. Ferner wird durch die Hinterlegung des Masseanteils des Achsenantriebsstrangs eine genaue Momentberechnung für unterschiedliche Beschleunigungen ermöglicht.

Ebenso kann der positionsunabhängige konstante Anteil einem richtungsabhängigen Reibanteil entsprechen. In dieser Ausführungsform handelt es sich bevorzugt um einen Achsenantriebsstrang mit einer horizontalen Bewegungsrichtung, bei dem keine Störgrößen durch Inertialkräfte vorliegen.

Bevorzugt handelt es sich bei der Antriebseinrichtung um einen Motor und bei den Leistungskennzahlen um ein Motormoment. Das Motormoment kann dabei beispielsweise über einen detektierten Motorstrom ermittelt werden. Bei einem Motor als Antriebseinrichtung entfaltet das erfindungsgemäße Verfahren besonders gute Wirkung, da hier viele Störgrößen, wie Rastmomente, Reibkräfte und Inertialkräfte, auftreten können.

Bei der Achse des Achsenantriebsstrangs kann es sich bevorzugt um eine lineare Achse handeln, die eine lineare Achse einer Tasteinrichtung darstellen kann und besonders bevorzugt eine lineare Achse einer Tasteinrichtung einer Kantenfügemaschine ist. Da bei linearen Achsen häufig sich verändernde Bewegungsabläufe vorliegen, entfaltet das erfindungsgemäße Verfahren mit einer hohen Steuergenauigkeit bei verschiedenen Bewegungsabläufen hier besonderen technischen Wert. Insbesondere bei einer Tasteinrichtung einer Kantenfügemaschine entfaltet das erfindungsgemäße Verfahren dabei sehr vorteilhafte Wirkung, da hier beispielsweise für gute Bearbeitungsqualitäten eine konstante Andrückkraft der Tasteinrichtung an das Werkstück erforderlich ist, die mit herkömmlichen Rückkopplungsregelungen nicht erzielbar ist.

Die Korrekturwerte können dabei vor Korrektur der Führungsgröße über einen Mittelwertfilter und/oder einen Bandpass geführt werden. Dies vermeidet Quantisierungssprünge und hochfrequente Störungen und resultiert in einer Steuerung, die eine verbesserte Bearbeitungsqualität ermöglicht.

Gemäß einem zweiten Aspekt stellt die vorliegende Erfindung in einer weiteren Zielrichtung eine Vorrichtung zur Steuerung eines Achsenantriebsstrangs einer Werkzeugmaschine zur Bearbeitung eines Werkstücks, das bevorzugt zumindest abschnittsweise aus Holz, Holzwerkstoffen, Kunststoff oder dergleichen besteht, bereit, mit einem Achsenantriebsstrang und einer Steuerung, die eingerichtet ist, den Achsenantriebsstrang gemäß dem Verfahren des ersten Aspekts der vorliegenden Erfindung zu steuern. Die Vorrichtung kann dabei eine Tasteinrichtung, insbesondere eine Tasteinrichtung einer Kantenfügemaschine, zum Führen eines Werkzeugs entlang des Werkstücks aufweisen, wobei diese Tasteinrichtung den Achsenantriebsstrang aufweisen kann. Bezüglich der Vorteile dieser Vorrichtung wird auf die Vorteile des zuvor beschriebenen Verfahrens verwiesen.

Das Steuerungsverfahren gemäß dem ersten Aspekt umfasst ein Verfahren zur Ermittlung von positionsabhängigen Korrekturwerten eines Achsenantriebsstrangs einer Werkzeugmaschine zur Bearbeitung eines Werkstücks, das bevorzugt zumindest abschnittsweise aus Holz, Holzwerkstoffen, Kunststoff oder dergleichen besteht, bereitgestellt, welches das lastlose Verfahren einer Achse des Achsenantriebsstrangs entlang eines Fahrwegs, insbesondere entlang des gesamten Fahrwegs der Achse, mit konstanter Geschwindigkeit mittels einer Antriebseinrichtung des Achsenantriebsstrangs, und das kontinuierliche paarweise Detektieren einer Achsenposition und einer Leistungskennzahl der Antriebseinrichtung an dieser Achsenposition entlang des Fahrwegs umfasst.

Ferner werden die detektierten Korrekturwerte in einen positionsunabhängigen konstanten und einen positionsabhängigen variablen Anteil aufgeteilt, wobei der konstante Anteil in einen richtungsunabhängiger Masseanteil und einen richtungsabhängigen Reibanteil aufgeteilt wird. Der richtungsunabhängige Masseanteil wird dabei bevorzugt durch Detektion der Leistungskennzahl der Antriebseinrichtung bei Beschleunigung der Achse auf die konstante Geschwindigkeit ermittelt, wobei der richtungsabhängige Reibanteil durch das Subtrahieren des richtungsunabhängigen Masseanteils von dem konstanten Anteil ermittelt werden kann. Mit diesem Verfahren wird das Ermitteln von positionsabhängigen Korrekturwerten eines Achsenantriebsstrangs einer Werkzeugmaschine ermöglicht, welche beliebige Störgrößen des Achsenantriebsstrangs umfassen und damit eine hochgenaue Steuerung dieses Achsenantriebsstrangs gemäß dem Steuerverfahren des erste Aspekts der vorliegenden Erfindung und der Steuervorrichtung des zweiten Aspekts der vorliegenden Erfindung ermöglichen.

## KURZE BESCHREIBUNG DER ZEICHNUNGEN

Fig. 1 zeigt einen exemplarischen Motormomentverlauf entlang eines Verfahrwegs eines Achsenantriebsstrangs zur Ermittlung von Korrekturwerten, der sich einstellt, wenn eine Achse des Achsenantriebsstrangs entlang des Verfahrwegs lastlos und mit konstanter Geschwindigkeit verfahren wird.

Figs. 2 und 3 zeigen schematisch die wesentlichen Schritte eines Verfahrens zur Steuerung einer Werkzeugmaschine unter Verwendung von Korrekturwerten zur Kompensation von Störgrößen gemäß einer bevorzugten Ausführungsform der vorliegenden Erfindung.

## DETAILLIERTE BESCHREIBUNG DER ERFINDUNG

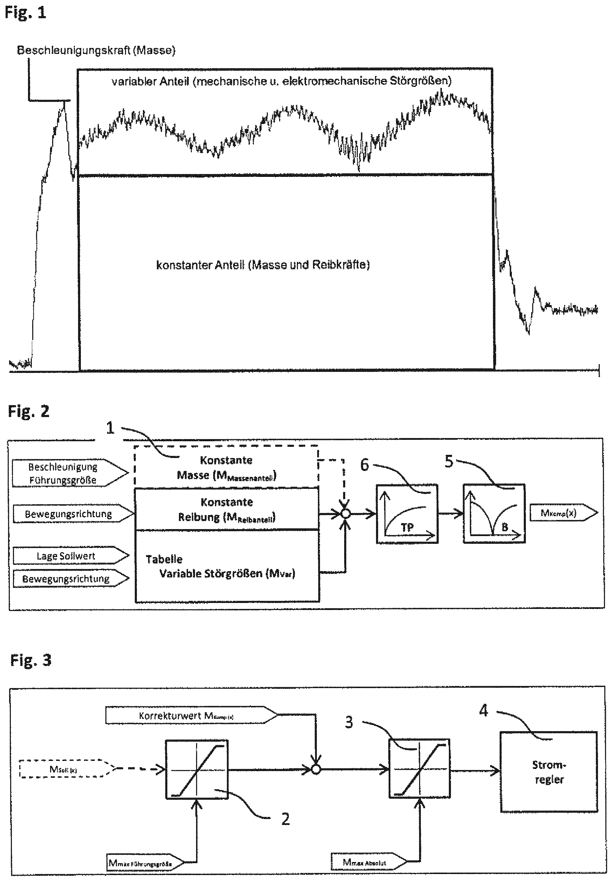

Im Folgenden wird die vorliegende Erfindung unter Bezugnahme auf die begleitenden Zeichnungen im Detail beschrieben. Vorerst wird unter Bezugnahme auf Fig. 1 ein Verfahren zur Ermittlung von Korrekturwerten gemäß einer Ausführungsform der vorliegenden Erfindung beschrieben. Anschließend wird unter Bezugnahme auf Figs. 2 und 3 ein Verfahren zum Steuern eines Achsenantriebsstrangs einer Werkzeugmaschine zur Bearbeitung eines Werkstücks, das bevorzugt zumindest abschnittsweise aus Holz, Holzwerkstoffen, Kunststoff oder dergleichen besteht, unter Verwendung der Korrekturwerte, die gemäß dem Verfahren ermittelt wurden, was unter Bezugnahme auf Fig. 1 beschrieben wird, beschrieben. Selbstverständlich ist hier auch ein erfindungsgemäßes Steuerverfahren mit anderen Korrekturwerten denkbar.

Die Verfahren zur Ermittlung von Korrekturwerten eines Achsenantriebsstrangs einer Werkzeugmaschine und zur Steuerung eines Achsenantriebsstrangs einer Werkzeugmaschine unter Berücksichtigung dieser Korrekturwerte werden in Verbindung mit einem Achsenantriebsstrang einer Tastrolle einer Kantenfügemaschine zum Fügen eines Beschichtungsmaterials an eine Werkstückschmalseite beschrieben. Selbstverständlich sind hier auch andere Achsenantriebsstränge einer Werkzeugmaschine denkbar. So kann es sich hier zum Beispiel um Anschläge zur Werkstückführung und/oder sonstige Tastelemente handeln.

Das Werkstück ist dabei bevorzugt zumindest abschnittsweise aus Holz, Holzwerkstoffen, Kunststoff oder dergleichen, wie es beispielsweise im Bereich der Möbel- und Bauelementeindustrie zum Einsatz kommt, ausgebildet. Dabei kann es sich beispielsweise um eine Massivholz- oder Spanplatte, Leichtbauplatte, Sandwichplatte oder dergleichen handeln. Das Beschichtungsmaterial kann bevorzugt ein Kantenband, welches aus unterschiedlichen Materialien, wie beispielsweise Kunststofffurnier, Papier, Pappe, Metall etc. und vielfältigen Kombinationen hiervon bestehen kann, sein. Dabei kann das Beschichtungsmaterial eine Funktionsschicht aufweisen, die durch Energieeintrag (beispielsweise Erwärmung oder Laserstrahlung) haftende Eigenschaften entfaltet, sodass das Beschichtungsmaterial an ein Werkstück über die Funktionsschicht gefügt werden kann.

Mittels der Tastrolle der Kantenfügemaschine ist eine konstante Zustellung eines Bearbeitungswerkzeugs zum Werkstück beim Verfahren des Werkzeugs entlang des Werkstücks herbeiführbar. Die Tastrolle weist in dieser bevorzugten Ausführungsform einen Achsenantriebsstrang auf, mittels dem die Zustellung des Bearbeitungswerkzeugs zum Werkstück anpassbar ist. Der Achsenantriebsstrang weist in dieser bevorzugten Ausführungsform dabei eine lineare Achse auf, mittels der die Relativverstellung von Werkzeug und Tasteinrichtung erfolgt. Der Achsenantriebsstrang kann jedoch auch eine Rotationsachse oder eine Kombination aus Linear- und Rotationsachse aufweisen. Der Achsenantriebsstrang wird dabei bevorzugt mit einem elektrischen Motor als Antriebseinrichtung angetrieben, wobei auch hier anderen Antriebseinrichtungen möglich sind.

Um gute Bearbeitungsergebnisse zu erzielen ist es erforderlich, dass die Tastrolle auch während der Verstellung der Zustellung über den Achsenantriebsstrang mit einer konstanten Kraft an das Werkstück angedrückt wird. Erfindungsgemäß erfolgt dies durch eine Steuerung, die Führungsgrößen mit positionsabhängigen Korrekturwerten korrigiert.

Die Korrekturwerte können gemäß einem Verfahren, das im Folgenden unter Bezugnahme auf Fig. 1 beschrieben wird, ermittelt werden. Im Rahmen des Ermittlungsverfahrens dieser bevorzugten Ausführungsform wird die lineare Achse des Achsenantriebsstrangs der Tastrolle mittels des Motors lastlos und mit konstanter Geschwindigkeit entlang des gesamten Verfahrwegs der linearen Achse verfahren. Während des Verfahrens werden Paare aus Motormoment des Motors und Position entlang des gesamten Verfahrwegs detektiert. Die Diskretisierung ist dabei beliebig wählbar. Beispielsweise liegt sie bei 1600 Stützpunkten/m. Selbstverständlich ist hier auch eine Detektion von Paaren lediglich entlang eines Teils des gesamten Verfahrwegs denkbar. Die Detektion kann dabei über die Messung des Motorstroms, der proportional zum Motormoment sein kann, erfolgen.

Fig. 1 zeigt beispielhaft einen Motormomentverlauf $M_{Motor}$ entlang des Verfahrwegs x der Achse des Achsenantriebsstrangs. Paare aus Motormoment $M_{Motor}$ und Position x werden im Rahmen dieser bevorzugten Ausführungsform für beide Verfahrrichtungen der linearen Achse des Achsenantriebsstrangs entlang des gesamten Verfahrwegs detektiert. Wie aus Fig. 1 ersichtlich, setzt sich der Motormomentverlauf aus einem konstanten Anteil und variablen Anteilen zusammen. Der konstante Anteil kann beispielsweise dem minimal detektierten Wert entlang des Verfahrwegs entsprechen und gleicht sich zwischen allen detektierten Paaren entlang des Weges, sodass dieser positionsunabhängig ist. Der konstante Anteil kann sich jedoch zwischen den Verfahrrichtungen unterscheiden, sodass dieser richtungsabhängig sein kann. Der variable Anteil jeder detektierten Position kann sich aus der Differenz aus detektiertem Motormoment an dieser Position und konstantem Anteil der entsprechenden Verfahrrichtung ergeben. Der variable Anteil kann daher positions- und richtungsspezifisch sein. Der positionsunabhängige jedoch richtungsabhängige konstante Anteil kann sich aus einem richtungsunabhängigen Masse- und einem richtungsabhängigen Reibanteil zusammensetzen. Hier ist es ebenfalls denkbar, dass der konstante Anteil keinen Masseanteil, sondern lediglich einen Reibanteil aufweist. Sofern ein Masseanteil vorliegt, kann dieser während der Beschleunigungsphase der Achse des Achsenantriebsstrangs auf die konstante Geschwindigkeit durch Detektion des maximalen Motormoments und Kenntnis der Beschleunigung ermittelt werden.

Im Rahmen dieser bevorzugten Ausführungsform werden im Rahmen des Verfahrens zur Ermittlung von Korrekturwerten eines Achsenantriebsstrangs für jede Verfahrrichtung ein Reibanteil, für jede Verfahrrichtung Paare aus Position und Motormoment und ggf. ein Masseanteil ermittelt und auf einem Speichermedium 1 abgespeichert, wie aus Fig. 2 ersichtlich. Unter Bezugnahme auf Figs. 2 und 3 wird nun ein Verfahren zur Steuerung des Achsenantriebsstrangs der Tastrolle der Kantenfügemaschine unter Berücksichtigung der Korrekturwerte, die gemäß dem zuvor beschriebenen Verfahren ermittelt wurden, beschrieben. Wie aus Fig. 3 ersichtlich, wird im Rahmen dieser bevorzugten Ausführungsform ein Motormomentsollwert $M_{soll}$ (x), der beispielsweise über eine nicht gezeigte Positionssteuerung oder Regelung bestimmt wird, mit einem Korrekturwert $M_{komp}$ (x) korrigiert. Bevorzugt wird der Motormomentsollwert $M_{soll}$ (x) vor Korrektur über einen Drehmomentbegrenzer 2 geführt, der den Drehmomentsollwert auf $M_{MAX\ FÜHRUNGSGRÖßE}$ beschränkt. Die Korrektur erfolgt dabei bevorzugt durch Addition des Korrekturwerts $M_{komp}$ (x) und des Motormomentsollwerts $M_{soll}$ (x) . Hier wird jede Position x des Motormomentsollwertverlaufs $M_{soll}$ (x) mit dem abgespeicherten Korrekturwert $M_{komp}$ (x) an dieser Position x korrigiert. Die Summe aus $M_{soll}$ (x) und $M_{komp}$ (x) kann dabei bevorzugt über einen Drehmomentbegrenzer 3 geführt werden, der die Summe auf $M_{MAX\ ABSOLUT}$ beschränkt. Der korrigierte Motormomentsollwert wird anschließend einem Stromregler 4 zur Regelung des Motorstroms des Motors des Antriebsstrangs der Tastrolle zugeführt. Dieser Stromregler stellt dabei bevorzugt einen herkömmlichen Rückkopplungsregler dar. Alternativ kann hier auch lediglich eine Steuerung, also keine zusätzliche Rückkopplung, vorliegen.

Der Korrekturwert $M_{komp}$ (x) wird in dieser bevorzugten Ausführungsform wie in Fig. 2 gezeigt ermittelt. In Abhängigkeit der Position (Lage Soll) und Bewegungsrichtung wird der variable Anteil der entsprechenden Position aus der richtungs- und positionsabhängigen Tabelle gelesen und zu dem richtungsabhängigen jedoch positionsunabhängigen Reibanteil und ggf. dem richtungs- und positionsunabhängigen Masseanteil addiert. Der für die Kompensierung erforderliche Masse-Momentanteil kann sich aus dem Produkt aus dem wie oben beschrieben ermittelten Masseanteil und der jeweiligen Beschleunigung des Motormomentsollwertverlaufs ergeben. Der sich ergebende Korrekturwert kann anschließend vor Korrektur des Motormomentsollwerts über einen Mittelwertfilter 5 und einen Bandpass 6 geführt werden. Folglich ergibt sich für eine horizontale Achse für jede Bewegungsrichtung der Zusammenhang:

$$M_{komp}(x) = \frac{\sum_{i=1}^{N} M_{VAR}(x)[i]}{N} + M_{Reibanteil}; \quad \text{x: Lagesollwert, N: Filterordnung}$$

Bei der vertikalen Achse kann zusätzlich die bewegte Masse berücksichtigt werden, die unabhängig von der Bewegungsrichtung addiert wird, sodass sich für jede Bewegungsrichtung folgender Zusammenhang ergibt:

$$M_{komp}(x) = \frac{\sum_{i=1}^{N} M_{VAR}(x)[i]}{N} + M_{Reibanteil} + M_{Masseanteil}; \quad \text{x: Lagesollwert, N: Filterordnung}$$

## Patentansprüche

1. Verfahren zur Steuerung eines Achsenantriebstrangs einer Werkzeugmaschine zur Bearbeitung eines Werkstücks, das bevorzugt zumindest abschnittsweise aus Holz, Holzwerkstoffen oder Kunststoff besteht, mit den Schritten:

   Bestimmen von Führungsgrößen an Positionen einer Achse des Achsenantriebstrangs,
   Korrigieren der Führungsgrößen an diesen Positionen mit Korrekturwerten, die mittels Leistungskennzahlen einer Antriebseinrichtung an diesen Positionen ermittelt wurden, die sich einstellen, wenn die Achse des Achsenantriebsstrangs durch die Antriebseinrichtung lastlos auf eine konstante Geschwindigkeit beschleunigt und mit dieser konstanten Geschwindigkeit entlang dieser Positionen verfahren wird, **dadurch gekennzeichnet, dass**
   die Korrekturwerte jeweils einen positionsunabhängigen konstanten und einen positionsabhängigen variablen Anteil aufweisen,
   die Korrekturwerte jeweils richtungsabhängig sind, und
   der positionsunabhängige konstante Anteil einen richtungsunabhängigen Masseanteil und einen richtungsabhängigen Reibanteil aufweist.

2. Verfahren nach einem der vorherigen Ansprüche, wobei das Verfahren bevorzugt die Summierung des positionsunabhängigen konstanten und des jeweiligen positionsabhängigen variablen Anteils zur Bildung der Korrekturwerte an den jeweiligen Positionen umfasst.

3. Verfahren nach Anspruch 1 und 2, wobei das Verfahren bevorzugt die Summierung des Produkt aus Masseanteil und der Beschleunigung der Führungsgröße an der jeweiligen Position und des richtungsabhängigen Reibanteils zur Bildung des richtungsabhängigen konstanten Anteils des Korrekturwerts umfasst.

4. Verfahren nach Anspruch 1 und 2, bei dem der positionsunabhängige konstante Anteil einem richtungsabhängigen Reibanteil entspricht.

5. Verfahren nach einem der vorherigen Ansprüche, bei dem es sich bei der Antriebseinrichtung um einen Motor und bei der Leistungskennzahl bevorzugt um ein Motormoment handelt.

6. Verfahren nach einem der vorherigen Ansprüche, bei dem es sich bei der Achse um eine lineare Achse, bevorzugt um eine lineare Achse einer Tasteinrichtung und besonders bevorzugt um eine lineare Achse einer Tasteinrichtung einer Kantenfügemaschine, handelt.

7. Verfahren nach einem der vorherigen Ansprüche, bei dem die Korrekturwerte vor Korrektur der Führungsgrößen über einen Mittelwertfilter und/oder einen Bandpass geführt werden.

8. Vorrichtung zur Steuerung eines Achsenantriebstrangs einer Werkzeugmaschine zur Bearbeitung eines Werkstücks, das bevorzugt zumindest abschnittsweise aus Holz, Holzwerkstoffen oder Kunststoff besteht, mit

einem Achsenantriebsstrang, und
einer Steuerung, die eingerichtet ist, den Achsenantriebsstrang gemäß dem Verfahren nach einem der Ansprüche 1 bis 7 zu steuern.

9. Vorrichtung nach Anspruch 8, ferner mit einer Tasteinrichtung, insbesondere einer Tasteinrichtung einer Kantenfügeeinrichtung, zum Führen eines Werkzeugs entlang des Werkstücks, wobei die Tasteinrichtung den Achsenantriebsstrang aufweist.

10. Verfahren gemäß einem der Ansprüche 1-7, umfassend ein Verfahren zur Ermittlung von positionsabhängigen Korrekturwerten eines Achsenantriebstrangs einer Werkzeugmaschine zur Bearbeitung eines Werkstücks, das bevorzugt zumindest abschnittsweise aus Holz, Holzwerkstoffen oder Kunststoff besteht, mit den Schritten:

Lastloses Beschleunigen einer Achse des Achsenantriebstrangs auf eine konstante Geschwindigkeit und lastloses Verfahren der Achse entlang eines Fahrwegs, insbesondere entlang des gesamten Fahrwegs der Achse, mit dieser konstanten Geschwindigkeit mittels einer Antriebseinrichtung des Achsenantriebstrangs,
Kontinuierliches paarweises Detektieren einer Achsenposition und einer Leistungskennzahl der Antriebseinrichtung an dieser Achsenposition entlang des Fahrwegs,
wobei die detektierten Korrekturwerte in einen positionsunabhängigen konstanten Anteil, der sich zwischen den detektierten Werten in einer Verfahrrichtung gleicht, und positionsabhängige variable Anteile aufgeteilt werden.

11. Verfahren nach Anspruch 10, bei dem die Achse in beide Verfahrrichtungen verfahren und die Paare aus Achsenposition und Leistungskennzahl für jede Richtung detektiert werden.

12. Verfahren nach Anspruch 10 oder 11, bei dem sich die positionsabhängigen variablen Anteile aus der Differenz der detektierten Werte und dem konstante Anteil ergeben, wobei die variablen Anteile bevorzugt in Form einer Tabelle gespeichert werden.

13. Verfahren nach Anspruch 12, bei dem der konstante Anteil einen richtungsunabhängigen Masseanteil und einen richtungsabhängigen Reibanteil aufweist, wobei das Verfahren ferner die Schritte umfasst

Ermitteln des richtungsunabhängigen Masseanteils durch Detektion der maximalen Leistungskennzahl der Antriebseinrichtung bei Beschleunigung der Achse auf die konstante Geschwindigkeit, und bevorzugt Speichern des Masseanteils; und bevorzugt
Ermitteln des richtungsabhängigen Reibanteils durch Subtrahieren des richtungsunabhängigen Masseanteils von dem konstanten Anteil, und bevorzugt Speichern des richtungsabhängigen Reibanteils.

14. Verfahren nach einem der Ansprüche 1 bis 7, bei dem der Korrekturwert gemäß dem Verfahren nach einem der Ansprüche 10 und 13 ermittelt wurde.

**Claims**

1. Method for controlling an axle drive train of a machine tool for machining a workpiece which preferably consists at least partially of wood, wood-based materials or plastic, with the steps:

determining reference variables at positions of an axle of the axle drive train,

correcting the reference variables at these positions using correction values determined by means of performance characteristics of a drive device at these positions which occur when the axle of the axle drive train is accelerated to a constant velocity by the drive device, without load, and is moved along these positions at this constant velocity, **characterised in that** the correction values each have a non-position-dependent constant component and a position-dependent variable component, the correction values are in each case direction-dependent, and the non-position-dependent constant component has a non-direction-dependent mass component and a direction-dependent frictional component.

2.   Method according to one of the preceding claims, wherein the method preferably comprises the summation of the non-position-dependent constant component and the respective position-dependent variable component to form the correction values at the respective positions.

3.   Method according to claim 1 and 2, wherein the method preferably comprises the summation of the product of the mass component and the acceleration of the reference variable at the respective position and of the direction-dependent frictional component to form the direction-dependent constant component of the correction value.

4.   Method according to claim 1 and 2, wherein the non-position-dependent constant component corresponds to a direction-dependent frictional component.

5.   Method according to one of the preceding claims, wherein the drive device is a motor and the performance characteristic is preferably a motor torque.

6.   Method according to one of the preceding claims, wherein the axle is a linear axle, preferably a linear axle of a sensing device and particularly preferably a linear axle of a sensing device of an edge joining machine.

7.   Method according to one of the preceding claims, wherein the correction values are passed through a mean value filter and/or a bandpass filter before the reference variables are corrected.

8.   Device for controlling an axle drive train of a machine tool for processing a workpiece which preferably consists at least partially of wood, wood-based materials or plastic, with

an axle drive train, and
a controller which is configured to control the axle drive train according to the method according to one of the claims 1 to 7.

9.   Device according to claim 8, further having a sensing device, in particular a sensing device of an edge joining device, for guiding a tool along the workpiece, wherein the sensing device is provided with the axle drive train.

10.  Method according to one of the claims 1-7, comprising a method for determining position-dependent correction values of an axle drive train of a machine tool for machining a workpiece which preferably consists at least partially of wood, wood-based materials or plastic, with the steps:

load-free acceleration of an axle of the axle drive train to a constant velocity and load-free movement of the axle along a travel path, in particular along the entire travel path of the axle, at this constant velocity by means of a drive device of the axle drive train,
continuous pairwise detection of an axle position and a performance characteristic of the drive device at this axle position along the travel path,
wherein the detected correction values are divided into a non-position-dependent constant component, which remains constant between the detected values in a travel direction, and position-dependent variable components.

11.  Method according to claim 10, wherein the axles move in both directions and the pairs consisting of axle position and performance characteristic are detected for each direction.

12.  Method according to claim 10 or 11, wherein the position-dependent variable components result from the difference between the detected values and the constant component, wherein the variable components are preferably stored in the form of a table.

13. Method according to claim 12, wherein the constant component has a non-direction-dependent mass component and a direction-dependent frictional component, wherein the method also includes the steps

determining the non-direction-dependent mass component by detecting the maximum performance characteristic of the drive device when accelerating the axle to the constant velocity, and preferably storing the mass component; and preferably

determining the direction-dependent frictional component by subtracting the non-direction-dependent mass component from the constant component, and preferably storing the direction-dependent frictional component.

14. Method according to one of the claims 1 to 7, wherein the correction value was determined according to the method according to one of the claims 10 and 13.

**Revendications**

1. Procédé de commande d'une ligne d'entraînement d'axe d'une machine-outil pour l'usinage d'une pièce à usiner qui est constituée de préférence au moins par sections de bois, de matériaux dérivés du bois ou de matière plastique, comprenant les étapes consistant à :

déterminer les grandeurs de référence aux positions d'une ligne d'entraînement d'axe,
corriger les grandeurs de référence dans ces positions avec des valeurs de correction qui ont été déterminées au moyen d'indices de performance d'un dispositif d'entraînement dans ces positions, qui s'établissent lorsque la ligne d'entraînement d'axe est accélérée sans charge à une vitesse constante par le dispositif d'entraînement et est déplacée à cette vitesse constante le long de ces positions, **caractérisé en ce que**
les valeurs de correction présentent chacune une partie constante indépendante de la position et une partie variable dépendant de la position,
les valeurs de correction sont respectivement dépendantes de la direction, et
la partie constante indépendante de la position présente une partie en masse indépendante de la direction et une partie de frottement dépendante de la direction.

2. Procédé selon l'une quelconque des revendications précédentes, dans lequel le procédé comprend de préférence la sommation de la partie constante indépendante de la position et de la partie variable respective dépendante de la position pour former les valeurs de correction aux positions respectives.

3. Procédé selon les revendications 1 et 2, dans lequel le procédé comprend de préférence la sommation du produit de la partie en masse et de l'accélération de la grandeur de référence à la position respective et de la partie de frottement dépendant de la direction pour former la partie constante dépendant de la direction de la valeur de correction.

4. Procédé selon les revendications 1 et 2, dans lequel la partie constante indépendante de la position correspond à une partie de frottement dépendant de la direction.

5. Procédé selon l'une quelconque des revendications précédentes, dans lequel le dispositif d'entraînement est un moteur et l'indice de puissance est de préférence un couple moteur.

6. Procédé selon l'une quelconque des revendications précédentes, dans lequel l'axe est un axe linéaire, de préférence un axe linéaire d'un dispositif de palpage et, plus préférentiellement, un axe linéaire d'un dispositif de palpage d'une chanfreineuse.

7. Procédé selon l'une quelconque des revendications précédentes, dans lequel les valeurs de correction passent par un filtre de valeur moyenne et/ou un filtre passe-bande avant la correction des grandeurs de référence.

8. Dispositif de commande d'une ligne d'entraînement d'axe d'une machine-outil pour l'usinage d'une pièce à usiner, laquelle consiste de préférence au moins par sections en du bois, des matériaux dérivés du bois ou de la matière plastique, avec

une ligne d'entraînement d'axe, et
une commande adaptée pour commander la ligne d'entraînement d'axe conformément au procédé selon l'une quelconque des revendications 1 à 7.

9. Dispositif selon la revendication 8, comprenant en outre un dispositif de palpage, en particulier un dispositif de palpage d'une chanfreineuse, pour guider un outil le long de la pièce à usiner, dans lequel le dispositif de palpage comprend la ligne d'entraînement d'axe.

10. Procédé selon l'une quelconque des revendications 1 à 7, comprenant un procédé pour déterminer des valeurs de correction dépendant de la position d'une ligne d'entraînement d'axe d'une machine-outil pour l'usinage d'une pièce qui consiste de préférence au moins par sections en du bois, des matériaux dérivés du bois ou une matière plastique, comprenant les étapes consistant à :

accélérer sans charge un axe de la ligne d'entraînement d'axe à une vitesse constante et déplacer sans charge l'axe le long d'une trajectoire, en particulier le long de toute la trajectoire de l'axe, à ladite vitesse constante au moyen d'un dispositif d'entraînement de la ligne d'entraînement d'axe,
détecter en continu, par paires, une position d'axe et un indice de performance du dispositif d'entraînement à ladite position d'axe le long de la trajectoire,
dans lequel les valeurs de correction détectées sont divisées en une partie constante indépendante de la position, laquelle est égale entre les valeurs détectées dans une direction de déplacement, et des parties variables dépendant de la position.

11. Procédé selon la revendication 10, dans lequel l'axe est déplacé dans les deux directions de déplacement et les paires de position d'axe et d'indice de puissance sont détectées pour chaque direction.

12. Procédé selon la revendication 10 ou 11, dans lequel les parties variables dépendant de la position résultent de la différence entre les valeurs détectées et la partie constante, dans lequel les parties variables sont de préférence enregistrées sous la forme d'un tableau.

13. Procédé selon la revendication 12, dans lequel la partie constante comprend une partie en masse indépendante de la direction et une partie de frottement dépendante de la direction, dans lequel le procédé comprend en outre les étapes consistant à

déterminer la partie en masse indépendante de la direction en détectant l'indice de puissance maximale du dispositif d'entraînement lors de l'accélération de l'axe à la vitesse constante, et de préférence mémoriser la partie en masse ; et de préférence
déterminer la partie de frottement dépendant de la direction en soustrayant la partie en masse indépendante de la direction de la partie constante, et de préférence mémoriser la partie de frottement dépendant de la direction.

14. Procédé selon l'une quelconque des revendications 1 à 7, dans lequel la valeur de correction a été déterminée conformément au procédé selon l'une quelconque des revendications 10 et 13.

**Fig. 1**

Beschleunigungskraft (Masse)

variabler Anteil (mechanische u. elektromechanische Störgrößen)

konstanter Anteil (Masse und Reibkräfte)

**Fig. 2**

1

| Beschleunigung Führungsgröße | Konstante Masse ($M_{Massenanteil}$) |
| Bewegungsrichtung | Konstante Reibung ($M_{Reibanteil}$) |
| Lage Sollwert | Tabelle |
| Bewegungsrichtung | Variable Störgrößen ($M_{var}$) |

6        5

TP        B

$M_{komp}(x)$

**Fig. 3**

Korrekturwert $M_{komp (x)}$

3        4

$M_{soll (x)}$        Strom-regler

2

$M_{max Führungsgröße}$        $M_{max Absolut}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1780095 A1
- DE 2009046959 A1
- DE 102011121530 A1
- WO 2008128918 A1